# EUROPÄISCHE PATENTANMELDUNG

(11) **EP 4 310 304 A1**
(43) Veröffentlichungstag der Anmeldung: **24.01.2024**
(21) Anmeldenummer: 23186145.1
(22) Anmeldetag: 18.07.2023
(51) Int. Cl.: F02C 3/22, F02C 7/22, F02C 9/40, F23D 17/00, F23R 3/36

(54) **VERBINDUNGSVORRICHTUNG ZUR STRÖMUNGSVERBINDUNG ZWISCHEN EINEM KRAFTSTOFF-ZULEITUNGSSYSTEM UND EINER DÜSENVORRICHTUNG, DÜSENVORRICHTUNG UND GASTURBINENANORDNUNG**

(30) Priorität: 21.07.2022 DE 102022207493
(71) Anmelder: Rolls-Royce Deutschland Ltd & Co KG, 15827 Blankenfelde-Mahlow (DE)
(72) Erfinder: Clemen, Carsten, 15827 Blankenfelde-Mahlow (DE)

(57) **Zusammenfassung**

Die Erfindung betrifft eine Verbindungsvorrichtung (10) zur Strömungsverbindung zwischen einem Kraftstoff-Zuleitungssystem und einer Düsenvorrichtung (1) einer Gasturbinenanordnung, insbesondere eines Triebwerks eines Luftfahrzeugs, mit einer von einer Wandung (3) umgrenzten Gas-Kraftstoffleitung (2) zur Leitung eines gasförmigen Kraftstoffes und einer von einer Wandung (5) umgrenzten Flüssig-Kraftstoffleitung (4) zur Leitung eines flüssigen Kraftstoffes. Ein optimierter Betrieb wird dadurch erreicht, dass die Verbindungsvorrichtung (10) zumindest einen eingangsseitig der Gas-Kraftstoffleitung (2) angeordneten separaten Gas-Leitungsabschnitt (12a) und einen stromab des separaten Gas-Leitungsabschnitts (12a) angeordneten Gas-Flüssig-Leitungsabschnitt (12c) umfasst, innerhalb dessen die Gas-Kraftstoffleitung (2) und die Flüssig-Kraftstoffleitung (4) zu einer Leitungsanordnung (26) zum Anschluss an die Düsenvorrichtung (1) angeordnet sind, und dass der Strömungsquerschnitt der Gas-Kraftstoffleitung (2) innerhalb des separaten Gas-Leitungsabschnitts (12a) und des Gas-Flüssig-Leitungsabschnitts (12c) zumindest im Wesentlichen gleich groß ausgebildet ist.

## Beschreibung

Die Erfindung betrifft eine Verbindungsvorrichtung zur Strömungsverbindung zwischen einem Kraftstoff-Zuleitungssystem und einer Düsenvorrichtung einer Gasturbinenanordnung, insbesondere eines Triebwerks eines Luftfahrzeugs, mit einer von einer Wandung umgrenzten Gas-Kraftstoffleitung zur Leitung eines gasförmigen Kraftstoffes und einer von einer Wandung umgrenzten Flüssig-Kraftstoffleitung zur Leitung eines flüssigen Kraftstoffes. Die Erfindung betrifft ferner eine Düsenvorrichtung und eine Gasturbinenanordnung.

Eine Verbindungsvorrichtung als Übergang zwischen einem Kraftstoff-Zuleitungssystem und einer Düsenvorrichtung der vorstehenden Art ist in der US 4 425 755 A angegeben.

Eine Düsenvorrichtung für ein Luftfahrzeug zum Betrieb mit Kraftstoffen unterschiedlicher Art ist in der US 2016/0 201 897 A1 angegeben.

Bei bekannten sogenannten "dual fuel" - Gasturbinenanordnungen, insbesondere Triebwerken für Luftfahrzeuge, können Kraftstoffe unterschiedlicher Art, insbesondere flüssige und/oder gasförmige Kraftstoffe, alternativ zueinander oder zeitgleich mittels einer Düsenvorrichtung in den Brennraum eingespritzt werden.

Der vorliegenden Erfindung liegt die Aufgabe zugrunde, eine Verbindungsvorrichtung, eine Düsenvorrichtung und eine Gasturbinenanordnung der eingangs genannten Art bereitzustellen, die einen optimierter Betrieb der Gasturbinenanordnung ermöglichen.

Die Aufgabe wird für die Verbindungsvorrichtung mit den Merkmalen des Anspruchs 1, für die Düsenvorrichtung mit den Merkmalen des Anspruchs 21 und für die Gasturbinenanordnung mit den Merkmalen des Anspruchs 22 gelöst. Vorteilhafte Ausgestaltungsvarianten sind in den abhängigen Ansprüchen angegeben.

Bezüglich der Verbindungsvorrichtung wird vorgeschlagen, dass die Verbindungsvorrichtung zumindest einen eingangsseitig der Gas-Kraftstoffleitung angeordneten separaten Gas-Leitungsabschnitt und einen stromab des separaten Gas-Leitungsabschnitts angeordneten Gas-Flüssig-Leitungsabschnitt umfasst, innerhalb dessen die Gas-Kraftstoffleitung und die Flüssig-Kraftstoffleitung zu einer Leitungsanordnung zum Anschluss an die Düsenvorrichtung angeordnet sind, und dass der Strömungsquerschnitt der Gas-Kraftstoffleitung innerhalb des separaten Gas-Leitungsabschnitts und des Gas-Flüssig-Leitungsabschnitts zumindest im Wesentlichen gleich groß ausgebildet ist.

Der separate Gas-Leitungsabschnitt ist vorzugsweise zylindrisch ausgebildet. Innerhalb des separaten Gas-Leitungsabschnitts ist keine Flüssig-Kraftstoffleitung angeordnet, wobei der Strömungsquerschnitt innerhalb des separaten Gas-Leitungsabschnitts vorzugsweise kreisförmig ausgebildet ist. In der Leitungsanordnung sind die Gas-Kraftstoffleitung und die Flüssig-Kraftstoffleitung in einer bestimmten, vorzugsweise hinsichtlich der Ausbildung und Ausrichtung zumindest im Wesentlichen konstanten, Art zueinander angeordnet.

Der gasförmige Kraftstoff umfasst insbesondere Wasserstoff oder ist aus Wasserstoff gebildet. Der flüssige Kraftstoff ist insbesondere aus einem kerosinbasierten oder kerosinverwandten Kraftstoff (z. B. Jet-A1, Diesel oder ein synthetischer Ersatzkraftstoff (SAF - "sustainable aviation fuel")) gebildet.

Für einfache Montagemöglichkeiten und gute Austauschbarkeit ist die Verbindungsvorrichtung vorzugsweise als separates Bauteil zur Montage in der Gasturbinenanordnung ausgebildet.

Durch den zumindest im Wesentlichen gleich großen Strömungsquerschnitt, der vorzugsweise innerhalb des separaten Gas-Leitungsabschnitts und der Leitungsanordnung zumindest im Wesentlichen konstant ist, werden vorteilhafterweise gleichartige Strömungsverhältnisse, insbesondere hinsichtlich der Geschwindigkeit und/oder der Druckverhältnisse, erreicht, wodurch ein vorteilhafter Betrieb, insbesondere hinsichtlich der Steuerung und/oder Regelung der Gasturbinenanordnung ermöglicht wird.

In einer bauraumoptimierten Ausgestaltungsvariante ist bei der Leitungsanordnung in dem Gas-Flüssig-Leitungsabschnitt die Gas-Kraftstoffleitung, insbesondere zylindrisch und/oder koaxial, um die Flüssig-Kraftstoffleitung angeordnet. Auf diese Weise ist die Gas-Kraftstoffleitung als (vorzugsweise innerhalb der Leitungsanordnung konstanter) symmetrischer Ringspalt mit einem ringförmigen Strömungsquerschnitt ausgebildet. Die Flüssig-Kraftstoffleitung weist vorzugsweise einen (innerhalb der Leitungsanordnung konstanten) kreisförmigen Strömungsquerschnitt auf.

Zur strömungsgünstigen Überführung der Strömung zwischen dem separaten Gas-Leitungsabschnitt und der Leitungsanordnung ist vorzugsweise zwischen dem separaten Gas-Leitungsabschnitt und dem Gas-Flüssig-Leitungsabschnitt ein Übergangsabschnitt angeordnet, innerhalb dessen die Flüssig-Kraftstoffleitung fluiddicht durch die Wandung (der Gas-Kraftstoffleitung) geführt und in die, insbesondere von der Gas-Kraftstoffleitung umgebene, Anordnung innerhalb der Leitungsanordnung gebracht ist. Die Flüssig-Kraftstoffleitung ist mit einem separaten Flüssig-Leitungsabschnitt, der außen an der Wandung befestigt ist, vorzugsweise mit einer Mittelachse rechtwinklig zu der Wandung und/oder zu der Längsachse angeordnet.

Dabei ist zweckmäßigerweise innerhalb des Übergangsabschnitts die Flüssig-Kraftstoffleitung mittels eines Umlenkstücks von der Wandung zu der Anordnung innerhalb der Leitungsanordnung gebracht, welches insbesondere eine Umlenkung im Verlauf der Flüssig-Kraftstoffleitung von dem außerhalb an die Wandung angrenzenden Verlauf auf den Verlauf innerhalb der Leitungsanordnung, z. B. um 70° bis 100°, insbesondere um 90°, bewirkt.

Günstige Herstellungsmöglichkeiten der Verbindungsvorrichtung ergeben sich, wenn das Umlenkstück einstückig oder stoffschlüssig, z. B. mittels Schweißen oder Löten, mit der Wandung verbunden ist. Bei der einstückigen Verbindung wird das Umlenkstück integral mit der Verbindungsvorrichtung insbesondere mittels eines additiven Fertigungsverfahrens (3D-Druck) gefertigt.

In einer strömungsgünstigen Ausbildungsvariante kann das Umlenkstück bogenförmig ausgebildet sein. Dabei weist es eine insbesondere stetige Krümmung auf und/oder verläuft ohne Knick in der Flüssig-Kraftstoffleitung von der Wandung bis zu der Leitungsanordnung.

In einer für das additive Fertigungsverfahren optimierten Ausbildungsvariante ist das Umlenkstück gerade ausgebildet und/oder in einem Winkel α von 45° oder weniger (eingeschlossen auf der sich von dem Scheitelpunkt stromauf erstreckenden Seite der Längsachse L und einer Mittellinie des Umlenkstücks) bezüglich der Längsachse an der Wandung angeordnet. Dabei ist insbesondere an der Wandung und an dem Übergang zu der Leitungsanordnung ein Knick im Verlauf der Flüssig-Kraftstoffleitung vorhanden.

Einfache Montagemöglichkeiten ergeben sich, wenn die Flüssig-Kraftstoffleitung in einem separaten Flüssig-Leitungsabschnitt außerhalb der Wandung (insbesondere des Hohlkörpers bzw. der Hülse) der Gas-Kraftstoffleitung einen Stutzen zur, insbesondere formschlüssigen, Verbindung mit einer Flüssig-Anschlussleitung des Kraftstoff-Zuleitungssystems aufweist, die, insbesondere unter Zwischenordnung eines Zwischenstücks, an das Umlenkstück, z. B. stoffschlüssig (mittels Schweißen oder Löten), gefügt ist. An der radialen Außenseite des Stutzens kann insbesondere eine Befestigungsstruktur, beispielsweise ein Gewinde, angeordnet sein.

In einer strömungsgünstigen Ausgestaltungsvariante ist die Gas-Kraftstoffleitung entlang einer Längsachse (gerade) ausgerichtet, wobei die Abschnitte der Gas-Kraftstoffleitung, mit dem separaten Gas-Leitungsabschnitt und/oder dem Übergangsabschnitt und/oder dem Gas-Flüssig-Abschnitt, koaxial bezüglich der Längsachse angeordnet sind.

In einer einfach zu fertigenden Ausgestaltungsvariante ist die Wandung der Gas-Kraftstoffleitung durch einen umlaufenden, insbesondere zylindrischen, Hohlkörper, z. B. eine Hülse, gebildet.

Einfache Montagemöglichkeiten mit Verbindung zu dem Kraftstoff-Zuleitungssystem ergeben sich, wenn die Wandung, insbesondere der Hohlkörper, an der radialen Außenseite eine Befestigungsstruktur, insbesondere ein Gewinde, zur Verbindung mit einer Gas-Anschlussleitung des Kraftstoff-Zuleitungssystems aufweist. Die Befestigungsstruktur ist vorzugsweise in dem separaten Gas-Leitungsabschnitt, stromauf des Querschnittssprungs, angeordnet.

Eine übermäßige Beschleunigung der Strömung und ein damit verbundener erhöhter Druckverlust wird vorteilhafterweise vermieden, wenn die Wandung, insbesondere der Hohlkörper, an dem Übergang von dem separaten Gas-Leitungsabschnitt zu dem Übergangsabschnitt eine Querschnittserweiterung, insbesondere einen Querschnittssprung, aufweist. So erfolgt zunächst eine Erweiterung des Strömungsquerschnitts, stromauf des Eintritts der Flüssig-Kraftstoffleitung in den Hohlkörper, bevor der Strömungsquerschnitt aufgrund der in der Leitungsanordnung integrierten Flüssig-Kraftstoffleitung wieder verkleinert wird, auf eine Größe entsprechend der Größe innerhalb des separaten Gas-Leitungsabschnitts. Der Übergangsabschnitt erstreckt sich definitionsgemäß ab (bzw. unmittelbar stromab) der Querschnittserweiterung bis zum Beginn der Leitungsanordnung, in der die Flüssig-Kraftstoffleitung auf ihre Anordnung innerhalb der Leitungsanordnung überführt ist.

Günstige Montagemöglichkeiten ergeben sich, wenn die Verbindungsvorrichtung an einem stromabseitigen Ende der Wandung der Gas-Kraftstoffleitung und/oder der Wandung der Flüssig-Kraftstoffleitung eine Verbindungsanordnung aufweist, mittels der die Verbindungsvorrichtung fluiddicht mit der Düsenvorrichtung verbindbar ist.

Eine sichere Dichtwirkung bezüglich des gasförmigen Kraftstoffes wird erreicht, wenn die Verbindungsanordnung an dem stromabseitigen Ende der Wandung, insbesondere des Hohlkörpers, einen Dichtkonus unter Bildung einer radial nach innen gerichteten Dichtfläche aufweist, zur Abdichtung der Gas-Kraftstoffleitung in Wirkverbindung mit einer komplementären Dichtfläche eines komplementären Dichtkonus an der Düsenvorrichtung. Der Winkel der Dichtfläche bezüglich der Längsachse beträgt beispielsweise zwischen 30° und 60°, insbesondere zwischen 40° und 50°, z. B. 45°.

Eine bevorzugte Ausbildungsvariante besteht darin, dass die Verbindungsanordnung an dem stromabseitigen Ende der Wandung der Flüssig-Kraftstoffleitung eine Verjüngung des Außendurchmessers derart aufweist, dass die Wandung in die von einer komplementären Wandung der Düsenvorrichtung umgrenzte Flüssig-Kraftstoffleitung, insbesondere in Ausbildung einer Hülse, insbesondere formschlüssig einschiebbar ist, wobei vorzugsweise der Innendurchmesser der komplementären Wandung dem Innendurchmesser der Wandung stromauf der Verjüngung entspricht, zumindest im axialen Bereich der Verjüngung (und/oder der Leitungsanordnung innerhalb der Düsenvorrichtung). Die komplementäre Wandung der Düsenvorrichtung ist insbesondere als Hülse ausgebildet. Durch die im Wesentlichen gleichen (konstanten) Innendurchmesser der Wandungen der Verbindungsvorrichtung und an dem stromaufseitigen Ende der Düsenvorrichtung sind vorteilhafterweise die Strömungsverhältnisse im Übergangsbereich zumindest weitgehend konstant. An dem stromaufseitigen Ende der Düsenvorrichtung, insbesondere zumindest großteils innerhalb des Düsenhalters, setzt sich die Leitungsanordnung mit vorzugsweise konstanter Anordnung der Leitungen zueinander (mit der innen liegenden Fluid-Kraftstoffleitung und der diese als Ringspalt umgebenden Gas-Kraftstoffleitung) sowie Größe und Ausbildung der Strömungsquerschnitte fort.

Eine sichere, fluiddichte Verbindung auch in der Flüssig-Kraftstoffleitung ist erreichbar, wenn in dem axialen Bereich der Verjüngung zumindest eine, vorzugsweise zwei, ringförmige Aussparung/en zur Aufnahme (jeweils) eines Dichtmittels vorhanden ist/sind. Das Dichtmittel ist vorzugsweise jeweils aus einem umlaufenden Dichtring gebildet, der im eingebauten Zustand zusammen mit der Wandung der Düsenvorrichtung eine Dichtwirkung entfaltet.

Vorzugsweise ist die Verjüngung derart ausgebildet, dass in montiertem Zustand eine axial gleitende Verbindung gebildet ist, wobei zwischen einem stromaufseitigen Ende der Wandung der Düsenvorrichtung und dem Querschnittssprung zu der Verjüngung ein umlaufender Spalt gebildet ist. Der Spalt ist derart, dass auch bei axialer Bewegung die Wandung der Düsenvorrichtung nicht axial an der Wandung der Verbindungsvorrichtung anschlägt. Auf diese Weise erfolgt keine Aufnahme von axial wirkenden Kräften an den Wandungen der Flüssig-Kraftstoffleitung, sondern an den (Außen-)Wandungen der Gas-Kraftstoffleitung. Somit ist sichergestellt, dass die durch das Befestigungselement, insbesondere die Mutter, wirkende Verbindungskraft vollständig als Anpresskraft auf die Dichtflächen der Gas-Kraftstoffleitung wirkt, um deren Dichtwirkung zu gewährleisten.

Eine günstige Befestigungsmöglichkeit ergibt sich, wenn die Verbindungsanordnung einen an dem stromabseitigen Ende der Wandung radial außen ausgebildeten, insbesondere umlaufenden, Querschnittssprung unter Bildung einer Stufe aufweist. Der Querschnittssprung kann als Anschlag für das Befestigungselement, insbesondere die Mutter, dienen, das bei Montage über die Verbindungsvorrichtung geschoben und an der Düsenvorrichtung befestigt werden kann.

Eine sichere Abdichtung ergibt sich, wenn die Dichtfläche axial versetzt zu der Verjüngung, insbesondere stromauf der Verjüngung, angeordnet ist. Auf diese Weise kann bei etwaig austretendem Flüssigkraftstoff ein Kontakt desselbigen mit der Dichtfläche innerhalb der Gas-Kraftstoffleitung und eine etwaige, damit einhergehende Beeinträchtigung der Dichtwirkung in der Gas-Kraftstoffleitung vermieden werden.

Vorzugsweise weist die Verbindungsvorrichtung einen ersten Verbindungsabschnitt umfassend zumindest den Übergangsabschnitt und einen zweiten Verbindungsabschnitt umfassend zumindest einen Teil der Leitungsanordnung und die Verbindungsanordnung auf, wobei der erste Verbindungsabschnitt und der zweite Verbindungsabschnitt einstückig ausgebildet oder form-, kraft- und/oder stoffschlüssig miteinander verbunden sind.

Die vorgeschlagene Düsenvorrichtung weist die komplementäre Verbindunganordnung auf, mittels der die Düsenvorrichtung fluiddicht mit der Verbindungsvorrichtung nach einem der vorstehenden Ausbildungsvarianten verbindbar ist. Die komplementäre Verbindungsanordnung umfasst insbesondere die komplementäre Wandung der Düsenvorrichtung zur Umgrenzung der Flüssig-Kraftstoffleitung und/oder die komplementäre Wandung der Gas-Kraftstoffleitung umfassend den komplementären Dichtkonus zur Bildung der Dichtanordnung in der Gas-Kraftstoffleitung. Zumindest am stromaufseitigen Ende weist vorzugsweise die Düsenvorrichtung die Leitungsanordnung auf, wobei die Strömungsquerschnitte der Gas-Kraftstoffleitung und der Flüssig-Kraftstoffleitung in ihrer Größe und Ausbildung denen der Leitungsanordnung innerhalb der Verbindungsvorrichtung zumindest großteils (z. B. abgesehen von Übergangsabschnitten, wie innerhalb der Verbindungsanordnung bezüglich der Flüssig-Kraftstoffleitung) entsprechen.

Nachfolgend wird die Erfindung anhand von Ausführungsbeispielen unter Bezugnahme auf die Zeichnungen näher erläutert. Es zeigen:
- Fig. 1A, 1B: ein Kraftstoff-Zuleitungssystem sowie eine (Fig. 1A) bzw. vier (Fig. 1B) Düsenvorrichtung/en, die mittels jeweils einer Verbindungsvorrichtung an dem Kraftstoff-Zuleitungssystem angeschlossen sind, im Längsschnitt und in Frontansicht mit Blickrichtung aus einem Brennraum,
- Fig. 2: die Düsenvorrichtung gemäß Fig. 1A, 1B mit einer Leitungsanordnung aufweisend eine Gas-Kraftstoffleitung und eine Flüssig-Kraftstoffleitung im Längsschnitt,
- Fig. 3A, 3B, 3C: einen ersten Verbindungsabschnitt der Verbindungsvorrichtung gemäß Fig. 1A, 1B mit einem Hohlkörper als Wandung der Gas-Kraftstoffleitung in schematischer Darstellung im Längsschnitt,
- Fig. 4A, 4B: den ersten Verbindungsabschnitt mit Umlenkstücken innerhalb der Flüssig-Kraftstoffleitung in unterschiedlichen Ausbildungsvarianten in schematischer Darstellung im Längsschnitt,
- Fig. 5A, 5B: den ersten Verbindungsabschnitt gemäß Fig. 3A, 3B, 3C mit zusätzlich dargestelltem, separatem Flüssig-Leitungsabschnitt außerhalb der Wandung, in schematischer Darstellung im Längsschnitt,
- Fig. 6A, 6B: den ersten Verbindungsabschnitt gemäß Fig. 3A, 3B, 3C unter Befestigung an dem Kraftstoff-Zuleitungssystem mittels Befestigungselementen, in schematischer Darstellung im Längsschnitt,
- Fig. 7: einen zweiten Verbindungsabschnitt der Verbindungsvorrichtung gemäß Fig. 1A, 1B, mittels dessen die Verbindungsvorrichtung an die Düsenvorrichtung angeschlossen ist und einen Teil der Düsenvorrichtung in schematischer Darstellung im Längsschnitt,
- Fig. 8: den zweiten Verbindungsabschnitt gemäß Fig. 7 in schematischer Darstellung im Längsschnitt und
- Fig. 9: einen Teil der Düsenvorrichtung gemäß Fig. 7 in schematischer Darstellung im Längsschnitt.

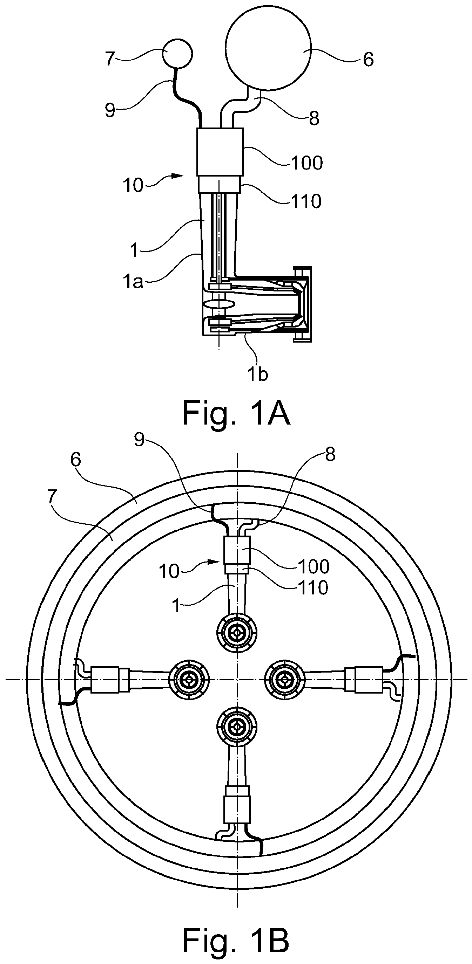

Fig. 1A und Fig. 1B zeigen ein Kraftstoff-Zuleitungssystem und beispielhaft vier an dem Kraftstoff-Zuleitungssystem angeordnete Düsenvorrichtungen 1 im Längsschnitt (Fig. 1A) sowie in Frontansicht (Fig. 1B, mit Blickrichtung aus einem Brennraum), wie sie beispielhaft in Zusammenhang mit der vorgeschlagenen Erfindung verwendbar sind. Das Kraftstoff-Zuleitungssystem und die Düsenvorrichtung 1 sind beispielsweise in der zum Anmeldezeitpunkt noch nicht veröffentlichten deutschen Patentanmeldung DE 10 2022 201 182.1 angegeben. Das Kraftstoff-Zuleitungssystem dient zur alternativen und/oder zeitgleichen Zugabe von gasförmigem Kraftstoff und/oder flüssigem Kraftstoff in eine Brennkammer einer Gasturbinenanordnung, insbesondere des Triebwerks eines Luftfahrzeugs.

Das Kraftstoff-Zuleitungssystem umfasst eine Gas-Ringleitung 6 und, vorzugsweise pro Düsenvorrichtung 1 genau eine, Gas-Anschlussleitung 8, sowie eine Flüssig-Ringleitung 7 und, vorzugsweise pro Düsenvorrichtung 1 genau eine, Flüssig-Anschlussleitung 9.

Die Gas-Ringleitung 6 und die Flüssig-Ringleitung 7 sind ringförmig ausgebildet, zur Anordnung außen radial um eine Brennkammer verlaufend (in Fig. 1A und Fig. 1B nicht gezeigt).

Die Gas-Anschlussleitung 8 und die Flüssig-Anschlussleitung 9 sind jeweils insbesondere flexibel ausgebildet.

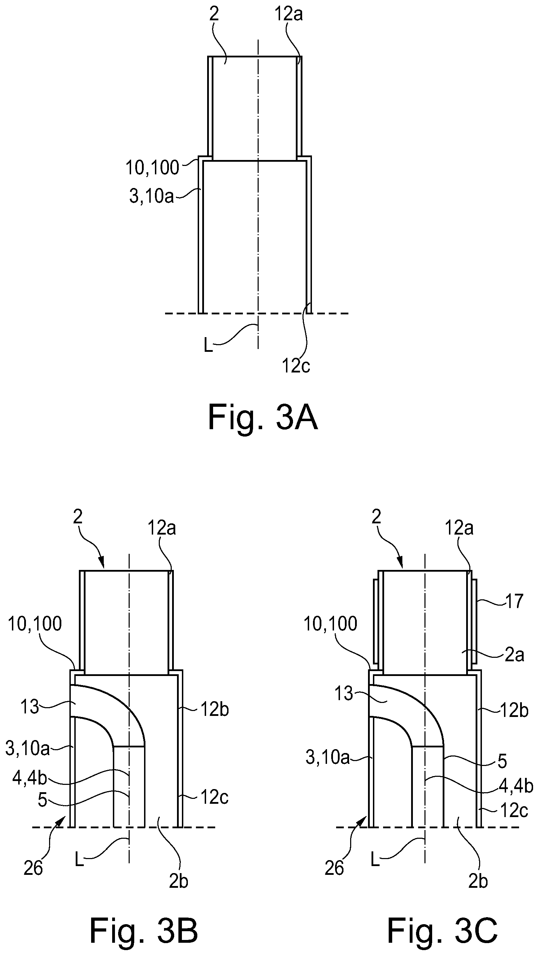

Die Düsenvorrichtungen 1 sind jeweils mit einer Verbindungsvorrichtung 10 umfassend Verbindungsabschnitte 100, 110 zur Strömungsverbindung an das Kraftstoff-Zuleitungssystem angeschlossen. Die Verbindungsvorrichtung 10 ist jeweils als separates Bauteil ausgebildet. Die nähere Ausgestaltung der Verbindungsvorrichtung 10 gemäß Fig. 1A und Fig. 1B wird nachfolgend anhand Fig. 3A, 3B, 3C bis Fig. 9 beschrieben.

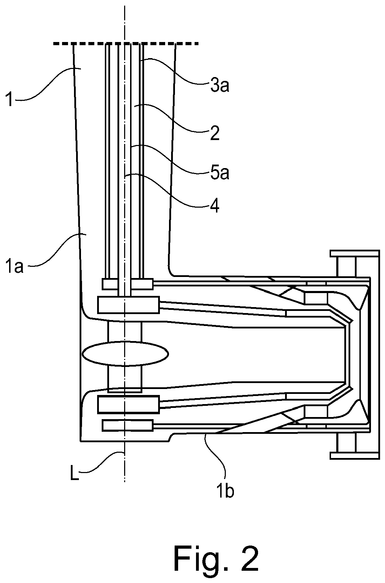

Fig. 2 zeigt in einer Darstellung im Längsschnitt die Düsenvorrichtung 1 gemäß Fig. 1A und Fig. 1B. Die Düsenvorrichtung 1 ist zum Betrieb mit Wasserstoff als gasförmigem Kraftstoff und einem kerosinbasierten und/oder einem kerosinverwandten Kraftstoff (z. B. Jet A-1, Diesel oder ein synthetischer Ersatzkraftstoff (SAF - "sustainable aviation fuel")) als Flüssig-Kraftstoff ausgelegt. Die Kraftstoffe können alternativ zueinander und/oder zeitgleich zum Einsatz kommen.

Die Düsenvorrichtung 1 weist einen Düsenhauptkörper 1b auf, über den im Betrieb gasförmiger und/oder flüssiger Kraftstoff in die Brennkammer eingespritzt wird. Weiterhin weist die Düsenvorrichtung 1 einen entlang einer Längsachse L ausgerichteten Düsenhalter 1a mit einer Leitungsanordnung umfassend eine Gas-Kraftstoffleitung 2 und eine Flüssig-Kraftstoffleitung 4 zur Leitung von flüssigem und/oder gasförmigem Kraftstoff an den Düsenhauptkörper 1b auf.

Fig. 3A, 3B, 3C bis Fig. 6 zeigen jeweils den ersten Verbindungsabschnitt 100 der Verbindungsvorrichtung 10 mit unterschiedlichen dargestellten Komponenten in schematischer Darstellung im Längsschnitt. Der erste Verbindungsabschnitt 100 ist insbesondere an dem stromaufseitigen Ende der Verbindungsvorrichtung 10 angeordnet und dient zum Anschluss der Gas- bzw. Flüssig-Kraftstoffleitung 2, 4 an der Verbindungsvorrichtung 10.

Wie Fig. 3A, Fig. 3B und Fig. 3C zeigen, weist die Verbindungsvorrichtung 10 die von einer Wandung 3 umgrenzte Gas-Kraftstoffleitung 2 zur Leitung des gasförmigen Kraftstoffes auf. Wie insbesondere Fig. 3A zeigt, ist die Wandung 3 vorliegend von einem zylindrischen Hohlkörper 10a, insbesondere von einer Hülse, gebildet.

Weiterhin weist die Verbindungsvorrichtung die von einer Wandung 5 umgrenzte Flüssig-Kraftstoffleitung 4 zur Leitung des flüssigen Kraftstoffes auf (vgl. Fig 3B und Fig. 3C).

An dem stromaufseitigen Ende der Wandung 5 bzw. des Hohlkörpers 10a ist die Gas-Kraftstoffleitung 2 durch einen insbesondere zylindrischen, separaten Gas-Leitungsabschnitt 12a gebildet, an bzw. in welchem die Flüssig-Kraftstoffleitung 4 nicht angeordnet ist. Innerhalb des Gas-Leitungsabschnitts 12a weist die Gas-Kraftstoffleitung 2 einen kreisförmigen Strömungsquerschnitt auf. An der radialen Außenseite des Hohlkörpers 10a ist dabei vorzugsweise eine Befestigungsstruktur, insbesondere ein Gewinde 17, vorhanden, mittels welcher die Verbindungsvorrichtung 10 an die Gas-Anschlussleitung 8 des Kraftstoff-Zuleitungssystems verbindbar ist.

Mittels eines Übergangsabschnitts 12b geht der separate Gas-Leitungsabschnitt 12a in einen stromab des Übergangsabschnitts 12b angeordneten Gas-Flüssig-Leitungsabschnitt 12c über, innerhalb dessen die Gas-Kraftstoffleitung 2 und die Flüssig-Kraftstoffleitung 4 zu der Leitungsanordnung 26 zum Anschluss an die Düsenvorrichtung 1 angeordnet sind.

Die Abschnitte der Gas-Kraftstoffleitung 2, mit dem separaten Gas-Leitungsabschnitts 12a, dem Übergangsabschnitt 12b und/oder dem Gas-Flüssig-Abschnitt 12c, sind koaxial bezüglich der gerade verlaufenden Längsachse L angeordnet.

Innerhalb des Gas-Flüssig-Leitungsabschnitts 12c, in der Leitungsanordnung 26, ist die Flüssig-Kraftstoffleitung 4 in die Gas-Kraftstoffleitung 2 integriert, wobei die Flüssig-Kraftstoffleitung 4 von der Gas-Kraftstoffleitung 2 umgeben angeordnet ist. Dabei sind die Gas-Kraftstoffleitung 2 und die Flüssig-Kraftstoffleitung 4 insbesondere zylindrisch, mit einem kreisförmigen Umfang, ausgebildet und erstrecken sich axial längs und symmetrisch zu der Längsachse L. Die Gas-Kraftstoffleitung 2 erstreckt sich zylindrisch um die Flüssig-Kraftstoffleitung 4, koaxial bezüglich der Längsachse L, unter Bildung eines symmetrischen Ringspaltes mit einem ringförmigen Strömungsquerschnitt.

Um vorteilhafterweise die Strömungsverhältnisse, insbesondere die Strömungsgeschwindigkeit, innerhalb der Gasströmung konstant zu halten, ist der Strömungsquerschnitt der Gas-Kraftstoffleitung 2 innerhalb des separaten Gas-Leitungsabschnitts 12a und des Gas-Flüssig-Leitungsabschnitts 12c, d.h. innerhalb der Leitungsanordnung 26, zumindest im Wesentlichen gleich groß ausgebildet. Zu diesem Zweck weist die Wandung 3, insbesondere der Hohlkörper 10a, an dem Übergang von dem separaten Gas-Leitungsabschnitt 12a zu dem Übergangsabschnitt 12b eine Querschnittserweiterung auf, die vorliegend für eine kompakte Ausbildung als Querschnittssprung ausgebildet ist. Die Änderung innerhalb des Strömungsquerschnitts in der Gas-Kraftstoffleitung 2 ist dabei derart, dass stromab des Übergangsabschnitts 12b, mit in die Leitungsanordnung 26 überführter Flüssig-Kraftstoffleitung 4, der Strömungsquerschnitt der Gas-Kraftstoffleitung 2 dem Strömungsquerschnitt innerhalb des separaten Gas-Leitungsabschnitts 12a entspricht.

Innerhalb des Übergangsabschnitts 12b ist die Flüssig-Kraftstoffleitung 4 von einem separaten Flüssig-Leitungsabschnitt 4a außerhalb des Hohlkörpers 10a in die Gas-Kraftstoffleitung 2 integriert. Dabei ist die Flüssig-Kraftstoffleitung 4 fluiddicht durch die Wandung 3 geführt und in die von der Gas-Kraftstoffleitung 2 umgebene Anordnung innerhalb der Leitungsanordnung 26 in dem Gas-Flüssig-Leitungsabschnitt 12c gebracht.

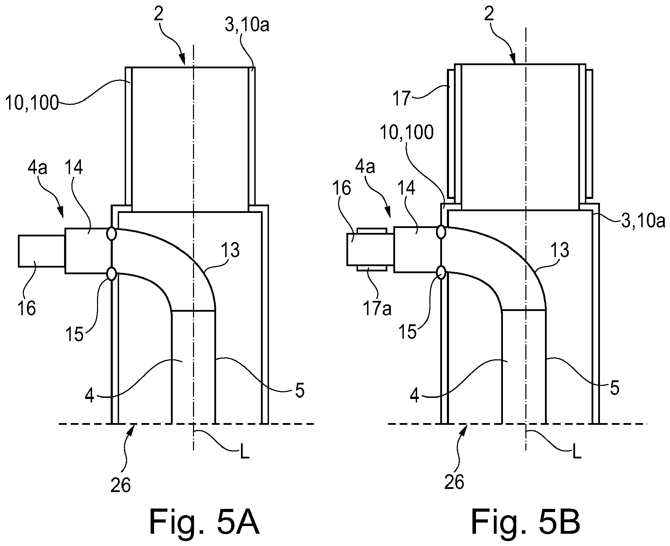

Wie in Fig. 5B und Fig. 5C gezeigt ist der Flüssig-Leitungsabschnitt 4a beispielhaft senkrecht zu der Wandung 3 und/oder der Längsachse L angeordnet. Dabei erfolgt die Überführung des Leitungsverlaufs in die Leitungsanordnung 26 mittels eines Umlenkstücks 13. Das Umlenkstück 13 bewirkt eine Umlenkung im Verlauf der Flüssig-Kraftstoffleitung 4 zwischen der Anordnung des separaten Flüssig-Leitungsabschnitts 4a an der Wandung 5 und der Längsachse L, in Fig. 3B, 3C beispielhaft um 90°.

Der Übergangsabschnitt 12b erstreckt sich definitionsgemäß von dem Querschnittssprung bis an das stromabseitige Ende des Umlenkstücks 13.

Dass Umlenkstück 13 kann dabei mit der Wandung 3, genauer dem Hohlkörper 10a, einstückig ausgebildet sein, wie insbesondere mittels eines additiven Fertigungsverfahrens (3D-Druck) erhältlich. Alternativ kann das Übergangsstück 13 als separates Bauteil gefertigt werden und stoffschlüssig, z. B. durch Schweißen oder Löten, an die Wandung 3 bzw. den Hohlkörper 10a gefügt werden.

Bei dem in Fig. 3B und Fig. 3C gezeigten Ausführungsbeispiel ist das Umlenkstück 13 beispielhaft als Bogen, mit kontinuierlichem Krümmungsverlauf, ausgebildet.

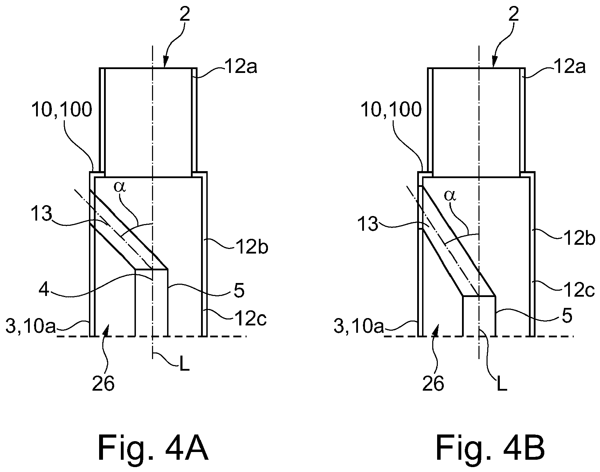

Fig. 4A und Fig. 4B zeigen jeweils eine weitere Ausbildungsvariante, die für die Herstellung mittels des additiven Fertigungsverfahrens optimiert ist. Dabei ist das Übergangsstück 13 so ausgeführt, dass der Winkel α gegenüber der Längsachse L (eingeschlossen auf der sich von dem Scheitelpunkt stromauf erstreckenden Seite der Längsachse L und einer Mittellinie des Umlenkstücks), stets gleich 45° (vgl. Fig. 4A) oder kleiner 45° (vgl. Fig. 4B) beträgt. Auf diese Weise ist eine gute Qualität bei der Herstellung des einstückigen Bauteils mittels des additiven Fertigungsverfahrens erreichbar. Dabei verläuft das Umlenkstück 13 beispielhaft gerade und weist jeweils an der Wandung 3 und am Übergang zu der Leitungsanordnung 26 einen Knick auf.

Fig. 5A und Fig. 5B zeigen die genauere Ausbildung des separaten Flüssig-Leitungsabschnitts 4a. Dabei weist der separate Flüssig-Leitungsabschnitt 4a außerhalb der Wandung 3 einen zylindrischen Stutzen 16 auf, mittels dem die Flüssig-Kraftstoffleitung 2 an das Kraftstoff-Zuleitungssystem, genauer an die Flüssig-Anschlussleitung 9, angeschlossen wird. Beispielsweise kann an der radialen Außenseite des Stutzens 16 eine Befestigungsstruktur, insbesondere ein Gewinde 17a, vorhanden sein.

Für eine einfache Montage ist zwischen dem Stutzen 16 und der Wandung 3 ein Zwischenstück 14 vorhanden, das z. B. stoffschlüssig, mittels Schweißen oder Löten, mit dem Umlenkstück 13 an einer Verbindung 15 verbunden ist. Zwischen dem Stutzen 16 und dem Zwischenstück 14 kann ein Querschnittssprung im Außen- und/oder Innenquerschnitt der Flüssig-Kraftstoffleitung 4 vorhanden sein.

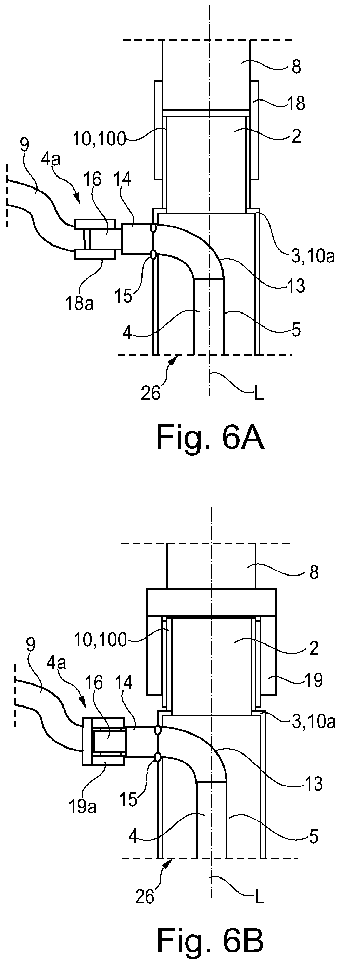

Fig. 6A und Fig. 6B zeigen die Verbindungsvorrichtung 10 angeschlossen an das Kraftstoff-Zuleitungssystem, wobei jeweils Teile der Gas-Anschlussleitung 8 und der Flüssig-Anschlussleitung 9 dargestellt sind.

Bei der in Fig. 6A gezeigten Ausbildungsvariante ist die Verbindung mittels jeweils einer an der korrespondierenden Anschlussleitung 8, 9 befestigten Mutter 18, 18a ausgestaltet, die jeweils in die korrespondierende Befestigungsstruktur, an der radialen Außenseite des separaten Gas-Leitungsabschnitts 12a und/oder des Stutzens 16, eingreift.

Bei der in Fig. 6B gezeigten Ausbildungsvariante ist die Verbindung mittels jeweils einer an der korrespondierenden Anschlussleitung 8, 9 angeordneten Presshülse 19, 19a ausgestaltet, die mit dem separaten Gas-Leitungsabschnitt 12a und/oder dem Stutzen 16 verpresst ist.

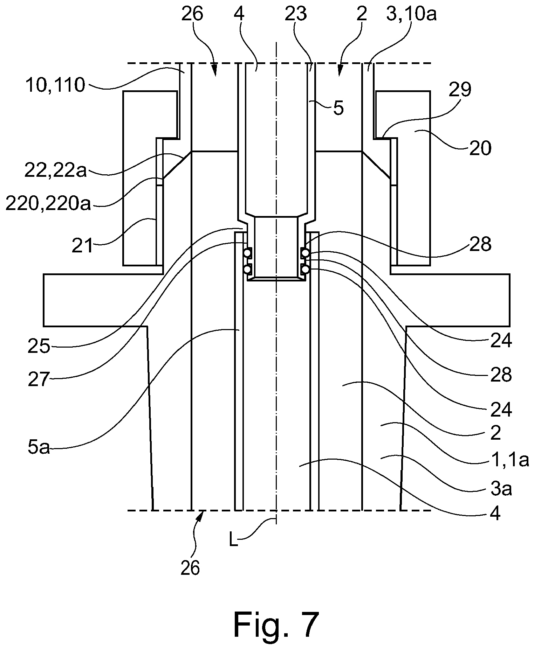

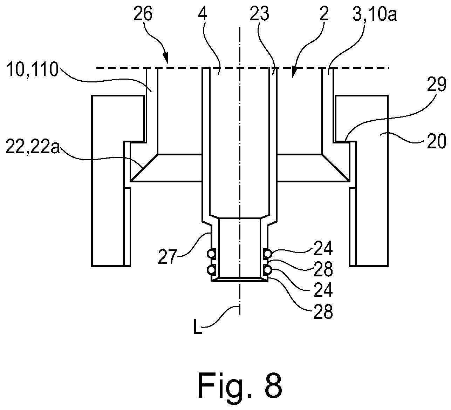

Fig. 7 und Fig. 8 zeigen jeweils den zweiten Verbindungsabschnitt 110 der Verbindungsvorrichtung 10, der an dem stromabseitigen Ende der Verbindungsvorrichtung 10 angeordnet ist. Der zweite Verbindungsabschnitt 110 dient zum Anschluss der Gas- bzw. Flüssig-Kraftstoffleitung 2, 4 der Verbindungsvorrichtung 10 mit fluiddichter Verbindung an der Düsenvorrichtung 1.

Zu diesem Zweck weist der zweite Verbindungsabschnitt 110 eine Verbindungsanordnung und das stromaufseitige Ende der Düsenvorrichtung 1 eine komplementäre Verbindungsanordnung auf, mittels welchen die Verbindungsvorrichtung 10 und die Düsenvorrichtung 1 fluiddicht verbunden sind.

Zumindest an dem stromaufseitigen Ende der Düsenvorrichtung 1, insbesondere innerhalb des Düsenhalters 1a, sind die Gas-Kraftstoffleitung 2 und die Flüssig-Kraftstoffleitung 4 in der Leitungsanordnung 26 zueinander angeordnet. Dabei weisen insbesondere eine komplementäre Wandung 3a der Gas-Kraftstoffleitung 2 und eine komplementäre Wandung 5a der Flüssig-Kraftstoffleitung 4 am stromaufseitigen Ende der Düsenvorrichtung 1 die gleichen Wandstärken auf wie die Wandungen 3, 5 und/oder sind die Strömungsquerschnitte gleich groß und gleichförmig ausgebildet. Dies bewirkt im Betrieb eine zumindest weitgehend gleichförmige Strömung des gasförmigen Kraftstoffes und/oder des flüssigen Kraftstoffes im Übergang zwischen der Verbindungsvorrichtung 10 und der Düsenvorrichtung 1.

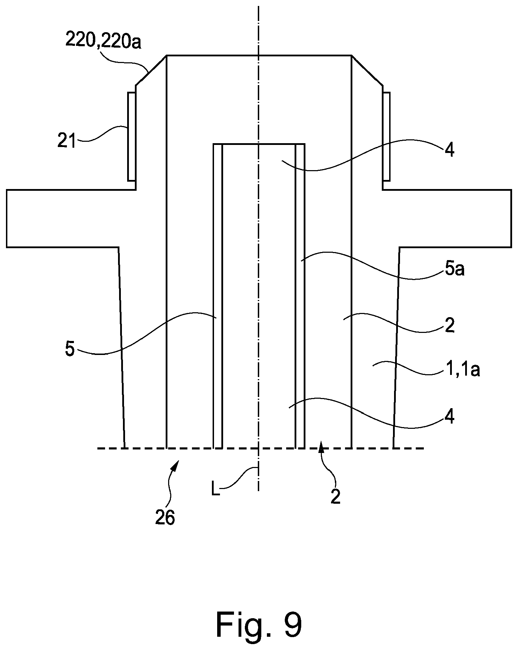

Fig. 7 zeigt den zweiten Verbindungsabschnitt 110 in Verbindung mit dem stromaufseitigen Ende der Düsenvorrichtung 1, Fig. 8 zeigt den zweiten Verbindungsabschnitt 110 separat und Fig. 9 zeigt das stromaufseitige Ende der Düsenvorrichtung 1 separat.

Die Verbindungsanordnung umfasst einen Dichtkonus 22, der am stromabseitigen Ende der Wandung 3 bzw. des Hohlkörpers 10a angeordnet ist. Der Dichtkonus 22 bildet an der Wandung 3 eine radial nach innen gerichtete Dichtfläche 22a. Die komplementäre Verbindungsanordnung der Düsenvorrichtung 1 umfasst einen komplementären Dichtkonus 220a, der am stromaufseitigen Ende der komplementären Wandung 3a angeordnet ist. Der komplementäre Dichtkonus 220 bildet an der komplementären Wandung 3a eine (in Strömungsrichtung) radial nach außen gerichtete Dichtfläche 220a. Die Dichtflächen 22a und 220a sind in montiertem Zustand mittels des Befestigungselements 20 aufeinandergepresst und bewirken eine fluiddichte Abdichtung des Gas-Kraftstoffkanals 2 gegen die Umgebung der Düsenvorrichtung 1.

Die Verbindungsanordnung weist eine an dem stromabseitigen Ende der Wandung 3 radial außen umlaufend ausgebildete Stufe 29 auf, die einen Querschnittssprung bezüglich der Außenmaße der Wandung 3 bzw. des Hohlkörpers 10a bildet. Die Stufe 29 bildet einen Anschlag für ein Befestigungselement 20, insbesondere eine Mutter. An der radialen Außenseite der komplementären Wandung 3a ist eine Befestigungsstruktur, insbesondere ein Gewinde 21 angeordnet, in welches das Befestigungselement 20 zur Verbindung der Verbindungsvorrichtung 10 und der Düsenvorrichtung 1 eingreift. In verbundenem Zustand erstreckt sich das Befestigungselement 20 axial über die Position der Dichtflächen 22a und 220a.

Weiterhin weist die Verbindungsanordnung an dem stromabseitigen Ende der Wandung 5 der Flüssig-Kraftstoffleitung 4 eine Verjüngung 27 des Außendurchmessers der Flüssig-Kraftstoffleitung 4 auf. Die Flüssig-Kraftstoffleitung 4 ist zumindest in diesem Bereich als Hülse 23 ausgebildet. Die Verjüngung 27 ist derart ausgebildet, dass die Wandung 5 in die komplementäre Wandung 5a insbesondere formschlüssig einschiebbar bzw. eingeschoben ist. Dabei entspricht vorzugsweise der Innendurchmesser der komplementären Wandung 5a dem Innendurchmesser der Wandung 5 stromauf der Verjüngung 27. In dem axialen Bereich der Verjüngung 27 sind in der Wandung 5 vorzugsweise mehrere, vorliegend beispielhaft zwei, ringförmig umlaufende Aussparungen 28 jeweils zur Aufnahme eines Dichtmittels 24, insbesondere in Form eines Dichtrings, vorhanden (vgl. Fig. 8). In verbundenem Zustand (vgl. Fig. 7) dienen die eingebauten Dichtmittel 24 zur Abdichtung der Flüssig-Kraftstoffleitung 4 gegenüber der umgebenden Gas-Kraftstoffleitung 2.

Die Verbindung zwischen den Wandungen 5, 5a der Flüssig-Kraftstoffleitung 4 ist insbesondere axial gleitend ausgebildet, sodass eine axiale Verschiebung möglich ist. Insbesondere ist die Verbindung derart, dass stets ein umlaufender Spalt 25 zwischen dem Querschnittssprung zur Verjüngung 27 der Wandung 5 und dem stromaufseitigen Ende der komplementären Wandung 5a vorhanden ist. Auf diese Weise ist sichergestellt, dass die mittels des Befestigungselements 20 aufgebrachte axiale Kraft zur Verbindung der Verbindungsvorrichtung 10 und der Düsenvorrichtung 1 alleine als Anpresskraft auf die Dichtflächen 22a, 220a wirkt und eine ausreichende Dichtwirkung zur Abdichtung der Gas-Kraftstoffleitung 2 erzielt wird.

Die Verjüngung 27 ist weiter stromab angeordnet als die Dichtfläche 22a der umgebenden Wandung 3. Auf diese Weise ist der Übergang zwischen der Verbindungsvorrichtung 10 und der Düsenvorrichtung 1 innerhalb der Flüssig-Kraftstoffleitung 2 versetzt, insbesondere stromab, zu dem Übergang innerhalb der Gas-Kraftstoffleitung 2 angeordnet.

Mittels der erfindungsgemäßen Verbindungsvorrichtung kann ein einfach zu montierender und sicherer Anschluss zwischen der Düsenvorrichtung 1 und dem Kraftstoff-Zuleitungssystem bereitgestellt werden, der hinsichtlich der Strömungsführung der Kraftstoffe, insbesondere des gasförmigen Kraftstoffes, im Betrieb optimiert ist.

### Bezugszeichenliste

- 1: Düsenvorrichtung
- 1a: Düsenhalter
- 1b: Düsenhauptkörper
- 2: Gas-Kraftstoffleitung
- 3: Wandung
- 3a: komplementäre Wandung
- 4: Flüssig-Kraftstoffleitung
- 4a: separater Flüssig-Leitungsabschnitt
- 5: Wandung
- 5a: komplementäre Wandung
- 6: Gas-Ringleitung
- 7: Flüssig-Ringleitung
- 8: Gas-Anschlussleitung
- 9: Flüssig-Anschlussleitung
- 10: Verbindungsvorrichtung
- 100: erster Verbindungsabschnitt
- 10a: Hohlkörper
- 110: zweiter Verbindungsabschnitt
- 12a: separater Gas-Leitungsabschnitt
- 12b: Übergangsabschnitt
- 12a: Gas-Flüssig-Leitungsabschnitt
- 13: Umlenkabschnitt
- 14: Zwischenstück
- 15: Verbindung
- 16: Stutzen
- 17: Gewinde
- 17a: Gewinde
- 18: Mutter
- 18a: Mutter
- 19: Presshülse
- 19a: Presshülse
- 20: Befestigungselement
- 21: Gewinde
- 22: Dichtkonus
- 220: komplementärer Dichtkonus
- 22a: Dichtfläche
- 220a: komplementäre Dichtfläche
- 23: Hülse
- 24: Dichtmittel
- 25: Spalt
- 26: Leitungsanordnung
- 27: Verjüngung
- 28: Aussparung
- 29: Stufe
- L: Längsachse

## Patentansprüche

1. Verbindungsvorrichtung (10) zur Strömungsverbindung zwischen einem Kraftstoff-Zuleitungssystem und einer Düsenvorrichtung (1) einer Gasturbinenanordnung, insbesondere eines Triebwerks eines Luftfahrzeugs, mit einer von einer Wandung (3) umgrenzten Gas-Kraftstoffleitung (2) zur Leitung eines gasförmigen Kraftstoffes und einer von einer Wandung (5) umgrenzten Flüssig-Kraftstoffleitung (4) zur Leitung eines flüssigen Kraftstoffes,
**dadurch gekennzeichnet,**
**dass** die Verbindungsvorrichtung (10) zumindest einen eingangsseitig der Gas-Kraftstoffleitung (2) angeordneten separaten Gas-Leitungsabschnitt (12a) und einen stromab des separaten Gas-Leitungsabschnitts (12a) angeordneten Gas-Flüssig-Leitungsabschnitt (12c) umfasst, innerhalb dessen die Gas-Kraftstoffleitung (2) und die Flüssig-Kraftstoffleitung (4) zu einer Leitungsanordnung (26) zum Anschluss an die Düsenvorrichtung (1) angeordnet sind, und dass der Strömungsquerschnitt der Gas-Kraftstoffleitung (2) innerhalb des separaten Gas-Leitungsabschnitts (12a) und des Gas-Flüssig-Leitungsabschnitts (12c) zumindest im Wesentlichen gleich groß ausgebildet ist.

2. Verbindungsvorrichtung (10) nach Anspruch 1,
**dadurch gekennzeichnet,**
**dass** bei der Leitungsanordnung (26) in dem Gas-Flüssig-Leitungsabschnitt (12c) die Gas-Kraftstoffleitung (2), insbesondere zylindrisch und/oder koaxial, um die Flüssig-Kraftstoffleitung (4) angeordnet ist.

3. Verbindungsvorrichtung (10) nach Anspruch 1 oder 2,
**dadurch gekennzeichnet,**
**dass** zwischen dem separaten Gas-Leitungsabschnitt (12a) und dem Gas-Flüssig-Leitungsabschnitt (12c) ein Übergangsabschnitt (12b) angeordnet ist, innerhalb dessen die Flüssig-Kraftstoffleitung (4) fluiddicht durch die Wandung (3) geführt und in die, insbesondere von der Gas-Kraftstoffleitung (2) umgebene, Anordnung innerhalb der Leitungsanordnung (26) gebracht ist.

4. Verbindungsvorrichtung (10) nach Anspruch 3,
**dadurch gekennzeichnet,**
**dass** innerhalb des Übergangsabschnitts (12b) die Flüssig-Kraftstoffleitung (4) mittels eines Umlenkstücks (13) von der Wandung (3) zu der Anordnung innerhalb der Leitungsanordnung (26) gebracht ist, welches insbesondere eine Umlenkung im Verlauf der Flüssig-Kraftstoffleitung (4) von dem außerhalb an die Wandung (5) angrenzenden Verlauf auf den Verlauf innerhalb der Leitungsanordnung, z. B. um 70° bis 100°, insbesondere um 90°, bewirkt.

5. Verbindungsvorrichtung (10) nach Anspruch 4,
**dadurch gekennzeichnet,**
**dass** das Umlenkstück (13) einstückig oder stoffschlüssig mit der Wandung (3) verbunden ist, insbesondere bogenförmig ausgebildet ist.

6. Verbindungsvorrichtung (10) nach Anspruch 4 oder 5,
**dadurch gekennzeichnet,**
**dass** das Umlenkstück (13) gerade ausgebildet und/oder in einem Winkel (α) von 45° oder weniger bezüglich der Längsachse (L) an der Wandung (5) ausgebildet angeordnet ist.

7. Verbindungsvorrichtung (10) nach einem der Ansprüche 3 bis 6,
**dadurch gekennzeichnet,**
**dass** die Gas-Kraftstoffleitung (2) entlang einer Längsachse (L) ausgerichtet ist, wobei die Abschnitte der Gas-Kraftstoffleitung (2), mit dem separaten Gas-Leitungsabschnitt (12a) und/oder dem Übergangsabschnitt (12b) und/oder dem Gas-Flüssig-Abschnitt (12c), koaxial bezüglich der Längsachse (L) angeordnet sind.

8. Verbindungsvorrichtung (10) nach einem der vorhergehenden Ansprüche,
**dadurch gekennzeichnet,**
**dass** die Wandung (3) der Gas-Kraftstoffleitung (2) durch einen umlaufenden, insbesondere zylindrischen, Hohlkörper (10a), z. B. eine Hülse, gebildet ist.

9. Verbindungsvorrichtung (10) nach einem der Ansprüche 3 bis 8,
**dadurch gekennzeichnet,**
**dass** die Wandung (3), insbesondere der Hohlkörper (10a), an dem Übergang von dem separaten Gas-Leitungsabschnitt (12a) zu dem Übergangsabschnitt (12b) eine Querschnittserweiterung, insbesondere einen Querschnittssprung, aufweist.

10. Verbindungsvorrichtung (10) nach einem der vorhergehenden Ansprüche,
**dadurch gekennzeichnet,**
**dass** die Verbindungsvorrichtung (10) an einem stromabseitigen Ende der Wandung (3) und/oder der Wandung (5) eine Verbindungsanordnung aufweist, mittels der die Verbindungsvorrichtung (10) fluiddicht mit der Düsenvorrichtung (1) verbindbar ist.

11. Verbindungsvorrichtung (10) nach Anspruch 10,
**dadurch gekennzeichnet,**
**dass** die Verbindungsanordnung an dem stromabseitigen Ende der Wandung (3), insbesondere des Hohlkörpers (10a), einen Dichtkonus (22) unter Bildung einer radial nach innen gerichteten Dichtfläche (22a) aufweist, zur Abdichtung der Gas-Kraftstoffleitung (2) in Wirkverbindung mit einer komplementären Dichtfläche (220a) an der Düsenvorrichtung (1).

12. Verbindungsvorrichtung (10) nach Anspruch 10 oder 11,
**dadurch gekennzeichnet,**
**dass** die Verbindungsanordnung an dem stromabseitigen Ende der Wandung (5) eine Verjüngung (27) des Außendurchmessers derart aufweist, dass die Wandung (5) in die von einer komplementären Wandung (5a) der Düsenvorrichtung (1) umgrenzte Flüssig-Kraftstoffleitung (4) innerhalb der Düsenvorrichtung (1), insbesondere in Ausbildung einer Hülse, insbesondere formschlüssig einschiebbar ist, wobei vorzugsweise der Innendurchmesser der komplementären Wandung (5a) dem Innendurchmesser der Wandung (5) stromauf der Verjüngung (27) entspricht.

13. Verbindungsvorrichtung (10) nach Anspruch 12,
**dadurch gekennzeichnet,**
**dass** die Verjüngung (27) derart ausgebildet ist, dass in montiertem Zustand eine axial gleitende Verbindung gebildet ist, wobei zwischen einem stromaufseitigen Ende der komplementären Wandung (5a) und dem Querschnittssprung zu der Verjüngung (27) ein umlaufender Spalt (25) gebildet ist.

14. Düsenvorrichtung (1) mit einer komplementären Verbindunganordnung, mittels der die Düsenvorrichtung (1) fluiddicht mit der Verbindungsvorrichtung (10) nach einem der Ansprüche 1 bis 13 verbindbar ist.

15. Gasturbinenanordnung mit zumindest einer Verbindungsvorrichtung (10) nach einem der Ansprüche 1 bis 13 und/oder zumindest einer Düsenvorrichtung (1) nach Anspruch 14.
